**Europäisches Patentamt**

**European Patent Office**

**Office européen des brevets**

(19)

(11) Veröffentlichungsnummer : **0 537 415 B1**

(12) **EUROPÄISCHE PATENTSCHRIFT**

(45) Veröffentlichungstag der Patentschrift :
**09.08.95 Patentblatt 95/32**

(51) Int. Cl.$^6$ : **G01P 15/08**, G01B 7/30

(21) Anmeldenummer : **92109036.1**

(22) Anmeldetag : **29.05.92**

(54) **Inertialsensor.**

(30) Priorität : **17.10.91 DE 4134311**

(43) Veröffentlichungstag der Anmeldung :
**21.04.93 Patentblatt 93/16**

(45) Bekanntmachung des Hinweises auf die
Patenterteilung :
**09.08.95 Patentblatt 95/32**

(84) Benannte Vertragsstaaten :
**BE DE ES FR GB IT NL SE**

(56) Entgegenhaltungen :
**CH-A- 379 167**
**DE-A- 3 543 603**

(73) Patentinhaber : **Daimler-Benz Aerospace**
**Aktiengesellschaft**
**D-81663 München (DE)**

(72) Erfinder : **Hofmann, Fritz**
**Rübezahlstrasse 58a**
**W-8000 München 83 (DE)**

EP 0 537 415 B1

EP 0 537 415 B1

**Beschreibung**

Die Erfindung bezieht sich auf einen Inertialsensor zur Messung kurzzeitiger Drehbewegungsänderungen, nach dem Oberbegriff des Patentanspruchs 1. Ein solcher Inertialsensor ist beispielsweise im Dokument CH-A-379 167 beschrieben.

Drehbeschleunigungs- oder Geschwindigkeitssensoren, die die Drehbewegung eines Sensorträgers aus der Relativdrehung einer bezüglich des Sensorträgers beweglichen Inertialmasse ermitteln, sind in zahlreichen Ausführungsformen bekannt angefangen von einfachen Fliehkraftsensoren über elektro mechanische Beschleunigungsmesser mit Quecksilber-Reaktionsmassen bis hin zu elektrisch angetriebenen Wendekreiselgeräten. Diese bekannten Sensorsysteme sind jedoch häufig mechanisch und elektronisch sehr aufwendig und verschleißanfällig, und vor allem sind sie nicht in der Lage, transiente Rotationszustände, in denen die Winkelgeschwindigkeit des Sensorträgers kurzzeitig hohe Spitzenwerte erreicht, mit ausreichender Genauigkeit zu erfassen. Ein hierfür typischer Anwendungsfall betrifft die Meßdatenerfassung von Kraftfahrzeugunfällen, wo kurzzeitig Drehbeschleunigungen in der Größenordnung von 10.000°/sec$^2$ und Drehgeschwindigkeiten bis zu 1000°/sec erreicht werden und der dabei durchlaufene Drehwinkel zur Unfallanalyse mit hoher Genauigkeit ermittelt werden muß, was mit den bekannten Intertialsystemen, sei es weil ihr Meßbereich zu niedrig liegt oder weil störende Meßsignal-Ubersteuerungen auftreten, nicht möglich ist.

Aufgabe der Erfindung ist es, einen Inertialsensor der eingangs genannten Art so auszubilden, daß er trotz einer mechanisch und rechenelektronisch einfachen, verschleißarmen Bauweise eine exakte Ermittlung vorübergehender und insbesondere extrem kurzzeitiger Rotationszustandsänderungen des Sensorträgers gewährleistet.

Diese Aufgabe wird erfindungsgemäß durch den im Patentanspruch 1 gekennzeichneten Inertialsensor gelöst.

Der erfindungsgemäß Inertialsensor arbeitet auf der Grundlage einer einfachen, von Nichtlinearitäten freien Übertragungsfunktion und besteht aus wenigen, herstellungs- und montagegünstigen Bauelementen, mit der Besonderheit, daß durch die sich aus der beanspruchten Drehmomentenkoppelung ergebende, lineare Dämpfungscharakteristik auch bei kurzzeitig sehr hohen Winkelbeschleunigungen des Sensorträgers eine wirksame Stabilisierung des Meßergebnisses gegen drehschwingungsbedingte Störeinflüsse und Übersteuerungseffekte erzielt wird und sich aus der relativen Winkelauslenkung zwischen Schwungmasse und Sensorgehäuse mit sehr geringem Rechenaufwand die vom Sensorträger im Inertialraum durchlaufene Drehbewegungsänderung, also insbesondere die Größe des zurückgelegten Drehwinkels, eindeutig ermitteln läßt, wodurch die zur Signalverarbeitung und -auswertung benötigte, periphere Elektronik ebenfalls stark vereinfacht wird.

Im Hinblick auf eine weitere bauliche Vereinfachung ist die Drehmomentenkoppelung zwischen Schwungmasse und Sensorträger gemäß Anspruch 2 zweckmäßigerweise als Induktionsbremse mit linear winkelgeschwindigkeitsabhängiger Drehmomentencharakteristik ausgebildet, und zwar in besonders bevorzugter Weise nach Anspruch 3 als Wirbelstrombremse mit einem schwungmassenfesten Permanentmagneten und einem sensorträgerfesten, mit einer Ringhülse als Leiterschicht versehenen Magnetjoch.

Der durch die lineare Dämpfungscharakteristik erzielte Nachlauf der Schwungmasse gegenüber den Drehbewegungsänderungen des Sensorträgers wird gemäß Anspruch 4 zur Verbesserung der Meßstabilität und -genauigkeit zweckmäßigerweise so gewählt, daß die sich aus der Größe der Schwungmasse und der Steilheit der linearen Drehmomenten-Kennlinie ergebende Zeitkonstante um ein Vielfaches größer als die Zeitdauer der Drehbewegungsänderungen des Sensorträgers ist.

Wie bereits erwähnt, läßt sich bei dem erfindungsgemäßen Inertialsensor der vom Sensorträger während der Drehbewegungsänderungen durchlaufene Drehwinkel sehr einfach und ohne aufwendige Integration aus den Meßsignalen des Drehmelders auf der Grundlage der linearen Übertragungsfunktion des Inertialsensors ermitteln. Dementsprechend einfach ist die zu diesem Zweck gemäß Anspruch 5 bevorzugte Auswerteschaltung aufgebaut.

Im Hinblick auf eine weitere bauliche Vereinfachung und Kostenersparnis bildet die Auswerteschaltung gemäß einem weiteren wesentlichen Aspekt der Erfindung nach Anspruch 6 eine von den übrigen Sensorkomponenten getrennnte Baueinheit, und die Meßsignale des Drehmelders werden zur späteren Signalauswertung in einem Zwischenspeicher abgelegt, wodurch vor allem für den eingangs geschilderten Anwendungsfall der Kraftfahrzeug-Unfallanalyse eine äußerst platz- und kostengünstige Sensorkonstruktion erhalten wird.

Ebenfalls aus Kosten-, vor allem aber auch aus Miniaturisierungsgründen ist der Drehmelder in besonders bevorzugter Weise von der in den Ansprüchen 7 - 10 gekennzeichneten Bauart, wie sie für sich allein in den Deutschen Patentanmeldungen P 4 113 880 und P 4 125 482 vorbeschrieben ist.

Die Erfindung wird nunmehr anhang eines Ausführungsbeispieles in Verbindung mit den Zeichnungen näher erläutert. Es zeigen in stark schematisierter Darstellung:

2

**Fig. 1**   eine teilweise geschnittene Darstellung eines Inertialsensors nach der Erfindung;
**Fig. 2**   eine Teilansicht des Drehmelders im Bereich der Magnetfeld-Sensorelemente;
**Fig. 3**   den Verlauf der Drehmomenten-Kennlinie der Wirbelstrombremse in Abhängigkeit von der Relativgeschwindigkeit von Schwungmasse und Sensorträger; und
**Fig. 4**   den Signalfluß im Inertialsensor und der zugehörigen Auswerteschaltung.

Der in den Fig. gezeigte Inertialsensor 2 dient zur Messung ruckartiger Rotationsbewegungen eines Sensorträgers 4 in einer zur Sensorachse A-A senkrechten Ebene und enthält eine Schwungmasse 6, die in dem nach außen abgeschlossenen Gehäuse 8 des Sensorträgers 4 über Lagerstellen 10 geringer Reibung um die Sensorachse A voll drehbeweglich angeordnet ist.

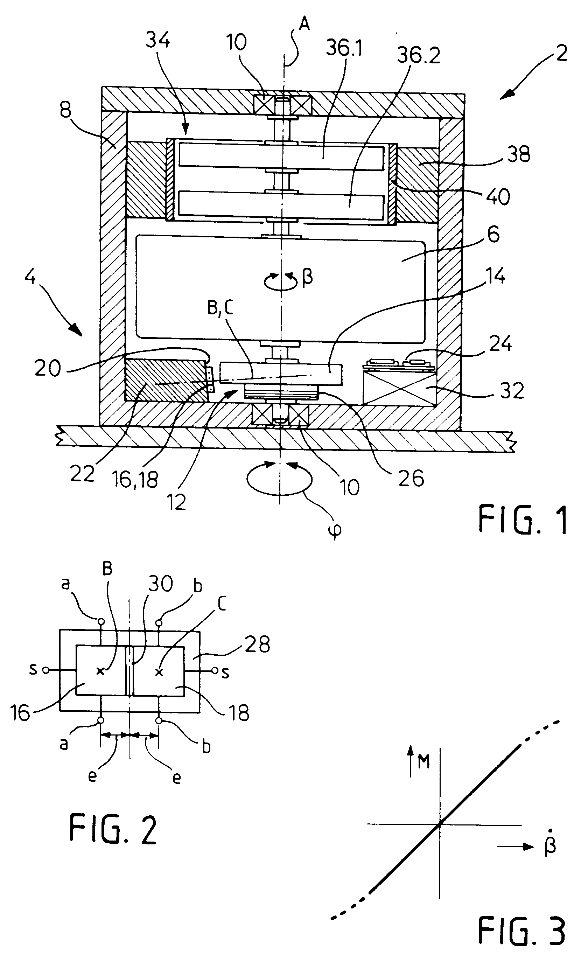

Der Drehwinkel β der Schwungmasse 6 relativ zum Sensorträger 4 wird durch einen insgesamt mit 12 bezeichneten Drehmelder abgegriffen. Dieser besteht aus einem schwungmassenfesten Permanent-Magnetelement 14, dessen magnetische N-S-Achse senkrecht zur Sensorachse A-A verläuft. sowie zwei Magnetfeld-Sensorelementen 16, 18, welche an einer ebenen Montagefläche 20 eines gehäusefesten Haltestegs 22 befestigt, z.B. mit dieser verklebt sind. Die Meßachsen B, C der Sensorelemente 16, 18 verlaufen parallel zueinander und jeweils mit einem Abstand e (siehe Fig. 2) exzentrisch zur Sensorachse A.

Die Drehlage des Magnetelelements 14 wird mit hoher Genauigkeit aus den beiden, sich in Abhängigkeit vom Drehwinkel β sinusförmig ändernden, um einen Phasen-Winkelabstand von 90° verschobenen, im übrigen aber identischen Meßsignalen der Sensorelemente 16, 18 ermittelt. Die sich aufgrund von Fertigungs- und Montagetoleranzen ergebenden Abweichungen vom geforderten Signalverlauf werden, mit Ausnahme der Phasen-Winkelstreuungen, durch ein Widerstandsnetzwerk 24 ausgeglichen. Die fertigungsbedingten Abweichungen vom geforderten Phasen-Winkelabstand hingegen werden durch Höhenjustierung des Magnetelements 14 in Richtung der Sensorachse A korrigiert, und zwar am einfachsten mit Hilfe von Distanzstücken 26 unterschiedlicher Dicke.

Damit bei einem hohen Miniaturisierungsgrad des Inertialsensors 2 die Justierempfindlichkeit des Drehmelders 12, also das Verhältnis der erzielten Phasenabstandsänderung zum Verschiebeweg des Magnetelements 14, nicht zu groß wird, ist die Montagefläche 20 in der in Fig. 1 gezeigten Weise bezüglich der Sensorachse A schräg angestellt, d.h. die Meßachsen B, C liegen jeweils in einer zur Sensorachse A geneigten Ebene, deren Schnittpunkt mit der Sensorachse A unterhalb der Mittelebene des Magnetelements 14 liegt.

Gemäß Fig. 2 sind die beiden Sensorelemente 16, 18 als Hallelemente in Tandembauweise dadurch hergestellt, daß zunächst nur eine einzige, zusammenhängende Halbleiterschicht auf einem Substrat 28 aufgebracht wird, die dann mittig durch eine querverlaufende Leiterschicht 30 in zwei gleich große, jeweils ein Hallelement 16 bzw. 18 bildende Teilzonen unterteilt wird, wobei die Hallelemente 16, 18 hinsichtlich der Steuerstromversorgung zwischen den Anschlüssen s in Reihe geschaltet sind, während die Meßspannungen jeweils zwischen den Anschlußelektroden a bzw. b abgegriffen, in dem nachgeschalteten Widerstands- und Verstärkernetzwerk 24 korrigiert und dann als sinß- bzw. cosß-Werte in einem Zwischenspeicher 32 abgelegt werden. Im übrigen ist der Drehmelder für sich allein Gegenstand der eingangs genannten Deutschen Patentanmeldungen P 4 113 880 und P 4 125 482, auf die zwecks weiterer Einzelheiten Bezug genommen wird.

Die Drehbewegungsänderungen des Sensorträgers 4 im Inertialraum, also die φ -Winkeländerungen gemäß Fig. 1, werden an die Schwungmasse 6 über eine Drehmomentenkoppelung 34 übertragen, die als Wirbelstrombremse ausgebildet ist, bestehend aus zwei flachzylindrischen, im Abstand zueinander fest mit der Schwungmasse 6 verbundenen und gemeinsam mit dieser um die Sensorachse A drehbaren, radial magnetisierten Permanent-Magnetscheiben 36.1 und 36.2 sowie einem trägerfesten, ringförmigen Magnetjoch 38, welches an seiner inneren Ringfläche mit einer Leiterschicht in Form einer die Magnetscheiben 36 konzentrisch umschließenden Kupferhülse 40 versehen ist. Für die Wirbelstrombremse 34 ist von funktionswesentlicher bedeutung, daß diese eine lineare Drehmomenten-Kennlinie besitzt, d.h. der Magnetluftspalt zwischen den Magnetscheiben 36 und dem Magnetjoch 38 muß unter Berücksichtigung der Koerzitivkraft des Permanent- Magneten 36 so groß gewählt sein, daß sich das übertragene Bremsmoment M im Arbeitsbereich proportional zur Winkelgeschwindigkeit β̇ der Schwungmasse 6 relativ zum Sensorträger 4 verändert, wie dies durch die in Fig. 3 dargestellte Drehmomenten-Kennlinie verdeutlicht ist. Anstelle zweier radial magnetisierter kann auch eine einzige, sektorförmig lateral magnetisierte Magnetscheibe vorgesehen sein.

Der beschriebene Inertialsensor 2 besitzt eine lineare Übertragungsfunktion nach folgender Gleichung

$$\Delta\beta \;=\; \Delta\varphi \;\times\; \frac{T_d \times s}{T_d \times s + 1},$$

wobei

$\Delta\varphi$       = Drehwinkeländerung des Sensorträgers 4 im Inertialraum,
$T_d$       = Dämpfungszeitkonstante,
$s$       = Laplace- Differential-Operator und

$\Delta\beta$  = Winkeländerung der Schwungmasse 6 relativ zum Sensorträger 4.

Die Dämpfungszeitkonstante, $T_d$, bestimmt sich nach der Größe der Schwungmasse 6 und der Steilheit der linearen Drehmomenten-Kennlinie der Wirbelstrombremse 34 und wird so gewählt, daß die Schwungmasse 6 einen ausreichend großen Nachlauf gegenüber einer kurzzeitigen Drehbewegungsänderung des Sensorträgers 4 besitzt.

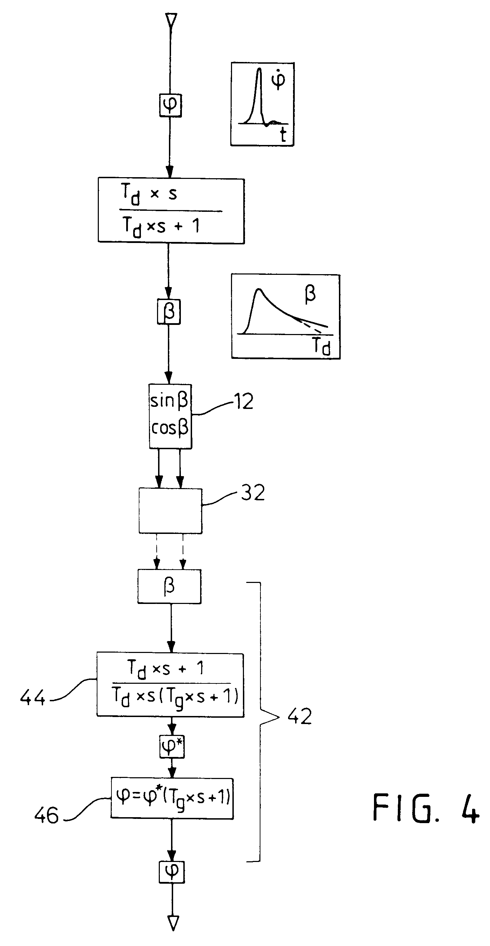

In Fig. 4 ist der Signalfluß des Inertialsensors 2 verdeutlicht. Eine transiente Änderung des Sensorträger-Drehwinkels , bei der die Winkelgeschwindigkeit kurzzeitig einen hohen Spitzenwert erreicht, führt entsprechend der oben angegebenen Übertragungsfunktion zu einer Änderung des relativen Drehwinkels $\beta$ der Schwungmasse 6 bezüglich des Sensorträgers 4. Die zugehörigen sin- und cos-Werte werden vom Drehmelder 12 abgegriffen und im Zwischenspeicher 32 abgelegt, von wo sie zur weiteren Signalverarbeitung in eine Auswerteschaltung 42 abgerufen werden. In dieser wird aus den abgerufenen sin- und cos-Werten zunächst der Relativwinkel $\beta$ errechnet und aus diesem dann nach Maßgabe der Umkehrfunktion in einem Auswertefilter 44 mit Glättungscharakteristik Tg und einer nachgeschalteten Korrekturstufe 46 der zu messende Drehwinkel $\varphi$ des Sensorträgers 4 ermittelt. Selbstverständlich ist eine spätere Signalverarbeitung in einer vom Inertialsensor getrennten Auswerteschaltung 42 nicht unbedingt erforderlich, sondern stattdessen können die Ausgangssignale des Drehmelders 12 unter Verzicht auf den Zwischenspeicher 32 auch einer unmittelbar nachgeordneten Auswerteschaltung 42 zugeführt werden.

**Patentansprüche**

1. Inertialsensor zur Messung kurzzeitiger Drehbewegungsänderungen eines Sensorträgers, mit einer in der Drehbewegungsebene des Sensorträgers relativ zu diesem rotationsbeweglichen Schwungmasse und einem den Rotationszustand der Schwungmasse bezüglich des Sensorträgers erfassenden Meßwertgeber,
**dadurch gekennzeichnet, daß**
zwischen Sensorträger (4) und Schwungmasse (6) eine Drehmomentenkoppelung (34) mit einer in Abhängigkeit von der relativen Winkelgeschwindigkeit ($\dot{\beta}$) zwischen Schwungmasse und Sensorträger linear verlaufenden Drehmonenten-Kennlinie vorgesehen und der Meßwertgeber als den Drehwinkel ($\beta$) der Schwungmasse bezüglich des Sensorträgers abgreifender Drehmelder (12) ausgebildet ist.

2. Inertialsensor nach Anspruch 1,
**dadurch gekennzeichnet, daß**
die Drehmomentenkoppelung (34) als Induktionsbremse mit linear winkelgeschwindigkeitsabhängiger Drehmomentencharakteristik ausgebildet ist.

3. Interialsensor nach Anspruch 2,
**dadurch gekennzeichnet, daß**
als Induktionsbremse eine Wirbelstrombremse mit einem schwungmassenfesten Permanentmagneten (36) und einem trägerfesten, auf der dem Permanent-Magneten zugekehrten Innenfläche mit einer ringförmig geschlossenen Leiterschicht (40) versehenen Magnetjoch (38) vorgesehen ist.

4. Inertialsensor nach einem der vorhergehenden Ansprüche,
**dadurch gekennzeichnet, daß**
die sich aus der Größe der Schwungmasse (6) und der Steilheit der linearen Drehmomenten-Kennlinie ergebende Zeitkonstante ($T_d$) der Drehwinkel-Übertragungsfunktion des Inertialsensors vielfach größer als die Zeitdauer der Drehbewegungsänderungen des Sensorträgers (4) gewählt ist.

5. Inertialsensor nach einem der vorhergehenden Ansprüche,
**gekennzeichnet** durch eine aus den Meßsignalen des Drehmelders (12) nach Maßgabe der Übertragungsfunktion des Inertialsensors den während der Drehbewegungsänderung vom Sensorträger (4) durchlaufenen Drehwinkel ($\varphi$) ermittelnde Auswerteschaltung (42).

6. Inertialsensor nach Anspruch 5,
**dadurch gekennzeichnet, daß**
die Auswerteschaltung (42) als vom Sensor (2) getrennte Baueinheit ausgebildet und dem Drehmelder (12) ein die Meßsignale zum späteren Abruf an die Auswerteschaltung aufzeichnender Zwischenspeicher (32) zugeordnet ist.

7. Inertialsensor nach einem der vorhergehenden Ansprüche,
**dadurch gekennzeichnet,** daß
der Drehmelder (12) aus einem gemeinsam mit der Schwungmasse (6) voll drehbeweglichen Permanent-Magnetelement (14) mit einem senkrecht zur Drehachse (A) gerichteten Magnetfeld sowie zwei in Umfangsrichtung der Drehachse versetzt zueinander angeordneten Magnetfeld-Sensorelementen (16, 18) besteht, deren Meßachsen (B, C) parallel zueinander und jeweils mit einem exzentrischen Abstand (e) zur Drehachse verlaufen.

8. Inertialsensor nach Anspruch 7,
**dadurch gekennzeichnet,** daß
die Magnetfeld-Sensorelemente (16, 18) auf einer gemeinsamen, ebenen Montagefläche (20) des Sensorträgers (4) befestigt sind und das Magnetelement (14) zur Einjustierung des Phasen-Winkelabstands der Drehmelder-Ausgangssignale in Richtung der Drehachse (A) relativ zu den Sensorelementen höhenverstellbar angeordnet ist.

9. Inertialsensor nach Anspruch 8,
**dadurch gekennzeichnet,** daß
die Montagefläche (20) gegenüber der Drehachse (A) der Schwungmasse (6) schräg geneigt verläuft.

10. Inertialsensor nach einem der Ansprüche 7 - 9,
**dadurch gekennzeichnet,** daß
die beiden Sensorelemente (16, 18) in Tandem-Bauweise aus einer einzigen Halbleiterschicht hergestellt sind, die durch eine Leiterschicht (30) in zwei nebeneinanderliegende, jeweils ein Sensorelement bildende Teilzonen unterteilt ist.

## Claims

1. An inertia sensor for measuring short-duration changes in rotary movements of a sensor carrier, comprising a centrifugal mass which is rotationally movable in the rotary movement plane of the sensor carrier relative thereto and a measured-value indicator which detects the state of rotation of the centrifugal mass relative to the sensor carrier, **characterized in that** between the sensor carrier (4) and the centrifugal mass (6) is provided a torque coupling (34) having a torque characteristic line which extends, in dependence on the relative angular velocity ($\beta$), linearly between centrifugal mass and sensor carrier, and that the measured-value indicator is designed as a rotary indicator which reads the rotary angle ($\beta$) of the centrifugal mass relative to the sensor carrier.

2. An inertia sensor according to claim 1, **characterized in that** the torque coupling (34) is designed as an induction brake with linear angular velocity dependent torque characteristics.

3. An inertia sensor according to claim 2, **characterized in that** an induction brake is provided in the form of an eddy-current brake comprising a permanent magnet (36) which is fixed to the centrifugal-mass, and a magnet yoke (38) which is fixed to the carrier, and a conducting layer (40) which is annularly sealed at the inside surface facing towards the permanent magnet.

4. An inertia sensor according to one of the above claims, **characterized in that** the time constant ($T_d$) of the rotary angle transmission function of the inertia sensor, which results from the value of the centrifugal mass (6) and the steepness of the linear torque characteristic, is often greater than the duration in time of the changes in rotary movement of the sensor carrier (4).

5. An inertia sensor according to one of the above claims, **characterized by** an evaluating circuit (42) which determines the rotary angle ($\phi$) which passes through the sensor carrier (4) during the change in rotary movement by means of the measuring signals of the rotary indicator (12) according to the transmission function of the inertia sensor.

6. An inertia sensor according to claim 6, **characterised in that** the evaluation circuit (42) is designed as a unit which is separate from the sensor (2), and the rotary indicator (12) is associated with an intermediate store (32) which records the measuring signal to be fed to the evaluation circuit at a later time.

7. An inertia sensor according to one of the above claims, **characterized in that** the rotary indicator (12) is composed of a permanent-magnet element (14), which is fully rotatable together with the centrifugal mass (6), with a magnet field oriented vertically to the rotary axis (A), and two magnet-field sensor elements (16, 18), which are arranged offset to each other in the peripheral direction of the rotary axis, the measuring axes (B, C) of which extend parallel to each other and at a respective eccentric distance (e) from the rotary axis.

8. An inertia sensor according to claim 7, **characterized in that** the magnet-field sensor elements (16, 18) are mounted on a common plane assembly surface (20) of the sensor carrier (4), and the magnet element (14) is arranged to be height adjustable relative to the sensor elements for the purpose of adjustment of the phase-angle gap of the rotary-indicator output signals in the direction of the rotary axis (A).

9. An inertia sensor according to claim 8, **characterized in that** the assembly surface (20) extends at a slant relative to the rotary axis (A) of the centrifugal mass (6).

10. An inertia sensor according to one of claims 7 - 9, **character- ized in that** the two sensor elements (16, 18) are manufactured in tandem of one single semi-conductor layer which is divided by one conductor layer (30) into two adjacent zone sections which form a respective sensor element.

## Revendications

1. Détecteur à inertie pour mesurer des changements de courte durée du mouvement de rotation d'un support de détecteur, comprenant une masse inerte mobile en rotation par rapport au support de détecteur, dans le plan de rotation de ce dernier, et un capteur de mesure détectant l'état de rotation de la masse d'inertie par rapport au support de détecteur, **caractérisé** par le fait qu'entre le support de détecteur (4) et la masse inerte (6) est prévu un coupleur (34) présentant une caractéristique de couple linéaire en fonction de la vitesse angulaire relative ($\dot{\beta}$) entre la masse inerte et le support de détecteur et que le capteur de mesure est réalisé sous forme de transmetteur de rotation (12) relevant l'angle de rotation ($\beta$) de la masse inerte par rapport au support de détecteur.

2. Détecteur à inertie suivant la revendication 1, **caractérisé** par le fait que le coupleur (34) est réalisé sous forme de frein à induction avec une caractéristique de couple variant de façon linéaire avec la vitesse angulaire.

3. Détecteur à inertie suivant la revendication 2, **caractérisé** par le fait que le frein à induction est constitué par un frein à courants de Foucault avec un aimant permanent (36) solidaire de la masse inerte et une culasse (38) solidaire du support, munie d'une couche conductrice (40) annulaire fermée sur la face intérieure tournée vers l'aimant permanent.

4. Détecteur à inertie suivant l'une des revendications précédentes, **caractérisé** par le fait que le la constante de temps ($T_d$) de la fonction de transfert d'angle de rotation du détecteur à inertie, constante qui résulte de la grandeur de la masse inerte (6) et de la pente de la caractéristique de couple linéaire, est un multiple de la durée des changements de mouvement de rotation du détecteur à inertie (4).

5. Détecteur à inertie suivant l'une des revendications précédentes, **caractérisé** par le fait qu'il comprend un circuit d'exploitation (42) qui détermine, à partir des signaux de mesure du transmetteur de rotation (12), selon la fonction de transfert du détecteur à inertie, l'angle de rotation ($\varphi$) parcouru pendant le changement de mouvement de rotation du support de détecteur (4).

6. Détecteur à inertie suivant la revendication 5, **caractérisé** par le fait que le circuit d'exploitation (42) est réalisé sous forme d'une unité séparée du détecteur (2) et qu'au transmetteur de rotation (12) est associée une mémoire intermédiaire (32) enregistrant les signaux de mesure en vue d'un appel ultérieur par le circuit d'exploitation.

7. Détecteur à inertie suivant l'une des revendications précédentes, **caractérisé** par le fait que le transmetteur de rotation (12) se compose d'un élément magnétique permanent (14) qui est entièrement mobile en rotation conjointement avec la masse inerte (6) et présente un champ magnétique orienté perpendiculairement à l'axe de rotation (A) ainsi que deux éléments détecteurs de champ magnétique (16, 18) qui sont décalés l'un par rapport à l'autre dans la direction circonférencielle de l'axe de rotation et dont les axes de mesure (B, C) sont parallèles l'un à l'autre et sont excentrés (distance e) par rapport à l'axe de rotation.

8. Détecteur à inertie suivant la revendication 7, **caractérisé** par le fait que les éléments détecteurs de champ magnétique (16, 18) sont fixés sur une surface de montage (20) plane commune du support de détecteur (4) et que l'élément magnétique (14) est disposé de façon réglable en hauteur suivant la direction de l'axe de rotation (A) par rapport aux éléments détecteurs en vue du réglage du déphasage des signaux de sortie du transmetteur de rotation.

9. Détecteur à inertie suivant la revendication 8, **caractérisé** par le fait que la surface de montage (20) est inclinée par rapport à l'axe de rotation (A) de la masse inerte (6).

10. Détecteur à inertie suivant l'une des revendications 7 à 9, **caractérisé** par le fait que les deux éléments détecteurs (16, 18) sont réalisés en structure tandem à partir d'une unique couche semi-conductrice qui est subdivisée par une couche conductrice (30) en deux zones partielles juxtaposées, formant chacune un élément détecteur.

FIG. 1

FIG. 2

FIG. 3

FIG. 4